# EUROPÄISCHE PATENTANMELDUNG

(11) **EP 4 368 523 A1**
(43) Veröffentlichungstag der Anmeldung: **15.05.2024**
(21) Anmeldenummer: 22205966.9
(22) Anmeldetag: 08.11.2022
(51) Int. Cl.: B65B 25/00, A23C 20/02, B65B 61/18, B65B 5/04

(54) **VERFAHREN ZUR KEIMARMEN VERPACKUNG VON VEGANEM KÄSE**

(71) Anmelder: DMK Deutsches Milchkontor GmbH, 27404 Zeven (DE)
(72) Erfinder: Beidenhauser, Georg-Wilhelm, 26180 Rastede (DE)
(74) Vertreter: Fabry, Bernd

(57) **Zusammenfassung**

Vorgeschlagen wird ein Verfahren zur keimarmen Verpackung von veganem Käse, umfassend oder bestehende aus den folgenden Schritten:
(a) Bereitstellen von veganem Käse in einem beheizten Pufferbehälter, dessen Temperatur ausreicht, um den veganen Käse in flüssigem Zustand zu halten;
(b) Bereitstellen eines Folienbeutels, bei dem die Folienbahnen so miteinander verschweißt sind, dass sie bei der Befüllung ein Rechteck bilden, wobei der Folienbeutel einen Füllstutzen mit Verschlusskappe aufweist;
(c) Befüllen des Folienbeutels mit dem veganen Käse aus dem Pufferbehälter über den Füllstutzen bis der Beutel seine rechteckige Form angenommen hat;
(d) Verschließen des Beutels mit der Verschlusskappe und
(e) Auskühlen der Käsemasse gegebenenfalls in einer dem Rechteck entsprechenden Form.

## Beschreibung

### GEBIET DER ERFINDUNG

Die vorliegende Erfindung befindet sich auf dem Gebiet der Verpackungsindustrie und betrifft ein Verfahren zur Herstellung einer speziellen keimarmen Verpackung.

### TECHNOLOGISCHER HINTERGRUND

Die keimarme Verpackung von Käse ist in der Praxis unproblematisch, da eine feste Masse verpackt werden muss, die durch eine natürliche Bakterienflora gegen schädliche Keime geschützt ist. Bei veganen Käseprodukten fehlt diese Schutzflora jedoch, was sie anfällig für Verkeimung macht, zumal die Abfüllung flüssig erfolgt, d.h. die Masse härtet in der Verpackung oder in einer Form vor dem Verpacken aus.

Flüssige Produkte, die in der Verpackung aushärten sollen, werden bislang üblicherweise in sogenannte "Pillows" abgefüllt. Dabei handelt es sich um eine Schlauchverpackung, bei der zwei Folienbahnen an den Seiten verschweißt werden, die dann abschnittsweise geschnitten und an den Kanten wieder verschweißt werden. Die Produkte erstarren in den Folien in der typischen Kopfkissenform. Dies ist aus zwei Gründen nachteilig: für die weitere Verarbeitung eignen sich die Verpackung wegen ihrer unregelmäßigen Form nicht und außerdem bildet die Folie leicht Falten, so dass eine Entfernung der Folie oftmals schwierig ist. Weitere Verfahren sind das Abfüllen in Tiefziehverpackungen, welches im Abfüllprozess offenes Produkt beinhaltet und nur geringe Abfülltemperaturen zulässt sowie das Abfüllen in einen Kunststoff-Darm, welches aber nur eine Stangenform ergibt. Auch hier ist nur eine Abfüllung bei niedrigen Temperaturen möglich.

### STAND DER TECHNIK

EP 0008961 B1 (MORIN SA) betrifft eine Zellulose-Verpackungsfolie zum Verpacken von mit kontrollierter Durchlässigkeit für Sauerstoff, Kohlendioxid, Ammoniak und Wasserdampf, die es dem Käse ermöglicht, richtig zu reifen, während er in dem Verpackungsmaterial eingewickelt ist. Die Zellulose-Verpackungsfolie wird aus einem Zellulose-Foliensubstrat mit einer Überzugsschicht aus einem Nitrocellulose-Lack gebildet, in dem Kasein- oder Stärkepartikel verteilt sind, deren Durchmesser größer ist als die Dicke der Überzugsschicht. Im Gebrauch wird der Weichkäse mit der Zellulose-Verpackungsfolie umhüllt, wobei die Nitrocellulose-Lackschicht dem Weichkäse zugewandt ist.

EP 0025431 B1 (TEICH AG) beansprucht ein Verpackungsmaterial zur Herstellung von Verpackungen, insbesondere für Weichkäse, das ein luftdurchlässiges Basismaterial (1), insbesondere eine perforierte Folie, aufweist, das auf der Innenseite der Verpackung mit einem eine Polyolefinschicht enthaltenden Barrierematerial verbunden ist, wobei das Basismaterial zum Umhüllen von Verpackungen mit dem Barrierematerial nur in definierten Bereichen verbunden ist, die nur einen kleinen Teil seiner Oberfläche einnehmen.

EP0128963 B1 (NESTLE) hat ein Verfahren zur Herstellung und Verpackung von Portionen streichfähiger Lebensmittel, z.B. verschiedener Schmelzkäsesorten, in mehreren Schichten zum Gegenstand. Dabei werden die Schichten in Formfächern einzeln geformt, indem sie getrennt gehalten werden, und beim Ausstoßen einzeln auf den Boden einer vorgeformten Schale geführt, wobei im Wesentlichen alle Spuren von Aufstrich aus den Formfächern entfernt werden.

EP 3620060 B1 (HOCHLAND) betrifft ein Verfahren zum Herstellen eines veganen Käseersatzes, bei dem dieser in eine mit einer Sperrwirkung gegen Feuchtigkeits- und/oder Sauerstoffdurchtritt aufweisende Hülle abgepackt wird, die aus einer Kunststoffschicht und/oder einer Metallschicht besteht.

### AUFGABE DER ERFINDUNG

Daher hat die Aufgabe der vorliegenden Erfindung darin bestanden, ein Verfahren zur Verfügung zu stellen, die die keimfreie Heißverpackung von veganem Käse sicherstellt und gleichzeitig ein Produkt liefert, das ohne weitere Schritte weiterverarbeitet werden kann.

### BESCHREIBUNG DER ERFINDUNG

Die Erfindung betrifft ein Verfahren zur keimarmen Verpackung von veganem Käse, umfassend oder bestehende aus den folgenden Schritten:
(a) Bereitstellen von veganem Käse in einem beheizten Pufferbehälter, dessen Temperatur ausreicht, um den veganen Käse in flüssigem Zustand zu halten;
(b) Bereitstellen eines Folienbeutels, bei dem die Folienbahnen so miteinander verschweißt sind, dass sie bei der Befüllung ein Rechteck bilden, wobei der Folienbeutel einen Füllstutzen mit Verschlussklappe aufweist;
(c) Befüllen des Folienbeutels mit dem veganen Käse aus dem Pufferbehälter über den Füllstutzen bis der Beutel seine rechteckige Form angenommen hat und
(d) Verschließen des Beutels mit der Verschlusskappe und
(e) Auskühlen der Käsemasse gegebenenfalls in einer dem Rechteck entsprechenden Form.

Durch die Abfüllung des heißen veganen Käseersatzproduktes nach der Herstellung aus einem Pufferbehälter in einen Folienbeutel, bei dem die Folienbahnen so miteinander verschweißt sind, dass sie bei der Befüllung keine unregelmäßige Form, sondern einen Quader bilden, wird gewährleistet, dass der Vorgang unter sterilen Bedingungen abläuft und gleichzeitig ein vorgeformtes Produkt erhalten wird, mit dem die Weiterverarbeitung beim Kunden problemlos möglich ist. Die Aushärtung zum Quader kann vorzugsweise durch Einlegen der Verpackung in eine entsprechende Form unterstützt werden. Die Befüllung des Beutels erfolgt über einen Füllstutzen ("Spout"), der über eine Verschlusskappe verfügt und sich nach dem Befüllen so verschließen lässt, dass er nicht mehr geöffnet werden kann. Dies schützt das Produkt auch vor zufälliger Verkeimung und stellt sicher, dass es originalverpackt ist.

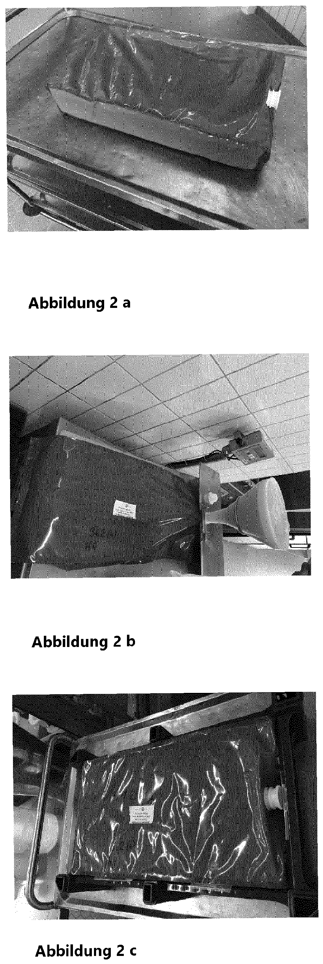

Als Material zur Herstellung der Folienbeutel kommt insbesondere Lineares Polyethylen mit niedriger Dichte (LLDPE) in Betracht, das in mehreren Lagen laminiert vorliegen und dabei auch Schichten aus anderen Kunststoffen aufweisen kann. Ein bevorzugtes Produkt ist das Cheertainer 15L BLUE SB Multi 30 Plug IR der Firma QuadPack, das ein Laminat aus vier Schichten darstellt, nämlich (von innen nach außen) Blue LLDPE (52µm), EVOH (6 µm), Blue LLDPE (52 µm) und OPA (15 µm). Abbildung 2 zeigt einen Folienbeutel vor, während und nach der Befüllung.

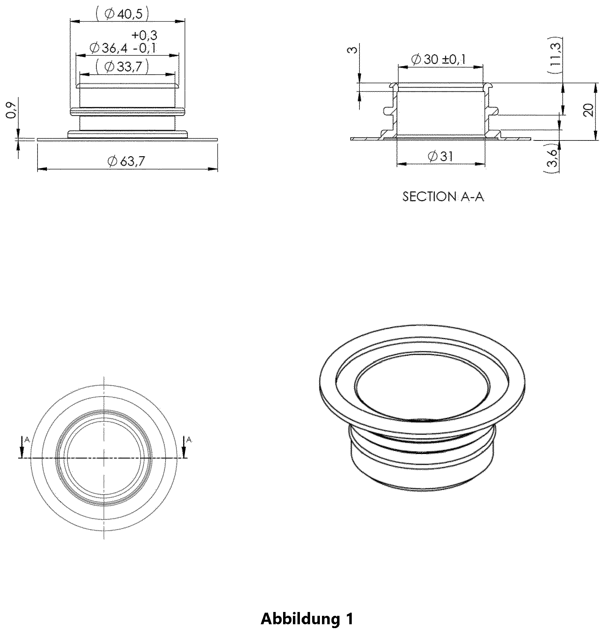

Die Füllstutzen mit Verschlusskappe sind ebenfalls im Markt erhältlich. Besonders geeignet sind die Typen, die von der Firma Modulpac AB angeboten werden (Einzelheiten dazu siehe **Abbildung 1****)**

## Patentansprüche

1. Verfahren zur keimarmen Verpackung von veganem Käse, umfassend oder bestehende aus den folgenden Schritten:
(a) Bereitstellen von veganem Käse in einem beheizten Pufferbehälter, dessen Temperatur ausreicht, um den veganen Käse in flüssigem Zustand zu halten;
(b) Bereitstellen eines Folienbeutels, bei dem die Folienbahnen so miteinander verschweißt sind, dass sie bei der Befüllung ein Rechteck bilden, wobei der Folienbeutel einen Füllstutzen mit Verschlusskappe aufweist;
(c) Befüllen des Folienbeutels mit dem veganen Käse aus dem Pufferbehälter über den Füllstutzen bis der Beutel seine rechteckige Form angenommen hat und
(d) Verschließen des Beutels mit der Verschlusskappe und
(e) Auskühlen der Käsemasse gegebenenfalls in einer dem Rechteck entsprechenden Form.

2. Verfahren nach Anspruch 1, **dadurch gekennzeichnet, dass** die rechteckige Form der Verpackung dem Euro-Blockformat für Käseblöcke entspricht.

3. Verfahren nach Anspruch 1, **dadurch gekennzeichnet, dass** man Folienbeutel einsetzt, die ganz oder teilweise aus LLDPE bestehen.

4. Verfahren nach Anspruch 1, **dadurch gekennzeichnet, dass** man Folienbeutel einsetzt, die mehrere Schichten Kunststoff aufweisen.
